# EUROPEAN PATENT SPECIFICATION

(11) **EP 0 890 501 B1**
(45) Date of publication and mention of the grant of the patent: **13.08.2003**
(21) Application number: 98201575.2
(22) Date of filing: 12.05.1998
(51) Int. Cl.: B62D 21/12, B60G 25/00, B60G 7/02

(54) **Pneumatic spring system with prestressed struts**
Luftfedersystem mit vorgespannten Elementen
Système à ressort pneumatique avec barres précontraintes

(30) Priority: 11.07.1997 NL 1006567
(43) Date of publication of application: 13.01.1999
(73) Proprietor: WEWELER NEDERLAND B.V., 7300 AC Apeldoorn (NL)
(72) Inventor: Aalderink, Derk Geert, 7245 NV Laren (NL)
(74) Representative: van Westenbrugge, Andries

(56) References cited:
- EP-A- 0 325 002
- EP-A- 0 421 556
- DE-A- 2 725 599
- FR-A- 2 000 650
- GB-A- 319 484
- GB-A- 332 732
- US-A- 2 633 203
- US-A- 2 789 835
- US-A- 3 397 895
- US-A- 4 000 913
- PATENT ABSTRACTS OF JAPAN vol. 096, no. 002, 29 February 1996 & JP 07 267144 A (NISSAN MOTOR CO LTD), 17 October 1995

## Description

The invention relates to a pneumatic spring system for a vehicle, comprising a vehicle chassis, a subframe situated at a distance below the vehicle chassis, supporting arms, which are connected to the subframe in a hinged manner on either side of the vehicle chassis and support an axle, two pneumatic springs, in each case located between a supporting arm and the chassis, and struts, which run obliquely downwards from the chassis and are connected to the subframe.

A pneumatic spring system of this kind is known from EP-B-421,556. The two struts used in that system are connected by means of welds to the chassis, on the one hand, and to the centre of the transverse connection, on the other hand. The structure of this pneumatic spring system is lightweight and can readily take up the transverse forces.

However, this known pneumatic spring system is not suitable for non-welded structures. A structure in which there are no welds, or fewer welds, has advantages with regard to the production process and the resistance to fatigue. This is because a weld forms a very flexurally rigid connection, which is less advantageous from the point of view of fatigue.

The object of the invention is to provide a pneumatic spring system which avoids these drawbacks. This object is achieved by the fact that each strut is prestressed between the chassis and the subframe.

In the pneumatic spring system according to the invention, it is not necessary for all the struts to be welded, while the required stiffness with regard to transverse forces is obtained by means of the prestressing. On the other hand, in this structure not all the rigid connections are as rigid as in welded structures, so that the fatigue behaviour is more favourable.

The prestressing in the struts can be achieved in various ways. Preferably, for this purpose at least one strut is connected at a fixed location to the chassis or the subframe and is connected to the other of these components by means of an adjustable stressing connection.

As an example, at least one strut may be connected to the chassis or the subframe by means of a hook connection.

It is important that the connection is free of play, so that the desired prestressing can be maintained. The play is removed from the structure by means of the adjustable stressing connection.

This adjustable stressing connection can be designed in various ways. It is thus possible, for example, for at least one strut to be connected to the subframe or the chassis by means of an eccentric mechanism which can be fixed in place. As an alternative, the prestressing may also be obtained by means of a swivel.

The pneumatic spring system according to the invention can be used in a trailer whose chassis is composed of longitudinal beams and transverse beams, whose struts are connected to a transverse beam which lies essentially vertically above the subframe. In this case, at least one strut may be connected at a fixed location to the transverse beam or the subframe and may be connected to the other of these components by means of an adjustable connection.

According to a first possibility, the invention may be used in a pneumatic spring system in which the subframe comprises a spring carrier arm which runs transversely below the vehicle chassis, forms a transverse connection and at each of its ends is connected to a supporting arm.

According to a second possibility, it may be a pneumatic spring system in which the subframe comprises spring carriers on either side of the vehicle chassis, which spring carriers are connected to one another by means of a transverse connection at a distance below the chassis and to each of which spring carriers a supporting arm is connected.

The struts described above may comprise any suitable component which can be stressed or compressed, such as a metal rod. According to a further possibility, each strut may comprise a prestressed cable or cable part.

Preferably, the cable parts forming the struts are designed integrally with a further cable part connecting the said cable parts, and the two free ends of the two cable parts forming the struts are connected to the transverse connection or the transverse beam.

These cable parts may form part of a cable which is wrapped around two fixed support points on the transverse beam or the transverse connection.

The cable may be wrapped around, and attached to, support points on the transverse beam and the transverse connection, in which at least one of the support points can be displaced by means of a prestressing member in order to prestress the cable by displacing the said support point(s).

As an alternative, a cable tensioner may be incorporated in the cable itself.

The invention will be explained in more detail below with reference to the exemplary embodiments illustrated in the figures.

Figures 1 to 6 show different possible embodiments of the pneumatic spring system according to the invention, in which all that is shown is a cross-section through the vehicle chassis with subframe and in which the struts are prestressed in various ways.

Figure 1a shows a cross-section through a vehicle chassis with longitudinal beams 1, 2, which are connected at regular distances by means of transverse beams 3. The longitudinal beams comprise double T-beams, with a web 4, top flange 5 and bottom flange 6.

A spring carrier 7, which is known per se, is welded to the underside of the bottom flanges 6. On their underside, the spring carriers 7 are connected to one another by means of a welded transverse connection 8, for example a U-beam as can be seen in the cross-section shown in Figure 1b.

In a known manner, each spring carrier 7 has a hole 9, in which a hinge pin (not shown) for a spring arm (not shown) can be accommodated. At its other end, the spring arm is also supported in a usual way with respect to the longitudinal beam 1 by means of an air bellows (not shown).

In order to provide the lateral stability for the subframe, which is denoted overall by 10 and comprises the two spring carriers 7 and the transverse connection 8, according to the invention the struts 11, 12 are provided. At one end, each of the struts 11, 12 has a hook 13, which is hooked into a recess 14 in the transverse connection 8. At the opposite end, each strut 11, 12 is connected to the transverse beam 3 by means of a prestressing connection 25. This prestressing connection comprises a cutout containing a bolt 15 (cf. Figure 1c), which projects into the eccentric hole 17 in the disc 16. For its part, the disc 16 is held in a hole 18 in the transverse beam 3 such that it can rotate about its axis.

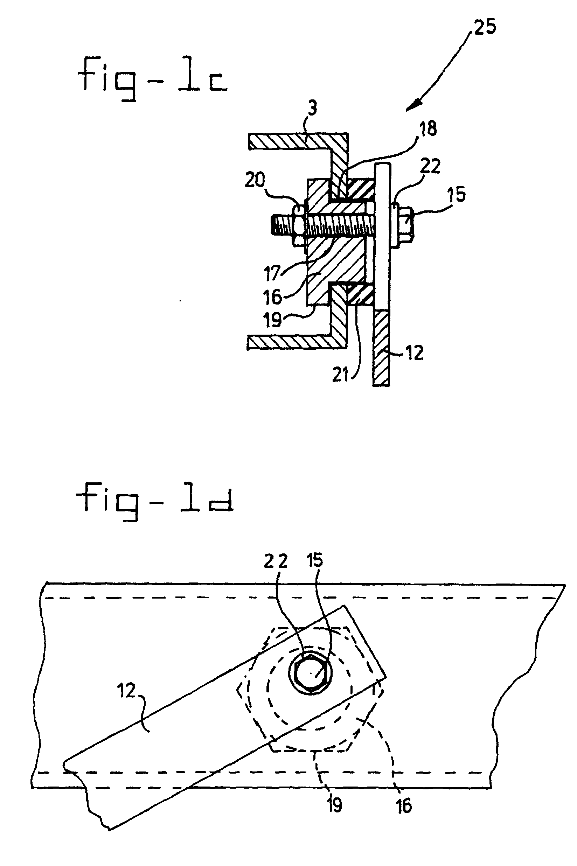

As shown in Figure 1d, each disc 16 has a hexagonal head 19, on which a spanner can engage. On rotating the hexagonal head 19, the strut 11, 12 is stressed, in such a manner that the desired prestress can be achieved.

After prestressing, the disc 16 can be clamped in the position reached by tightening nut 20 on bolt 15. The hexagonal head 19 interacts with the washer 21, in such a manner that the assembly comprising disc 16, transverse connection 3, washer 21 and bolt head 15 with ring 22 are clamped firmly and non-rotatably.

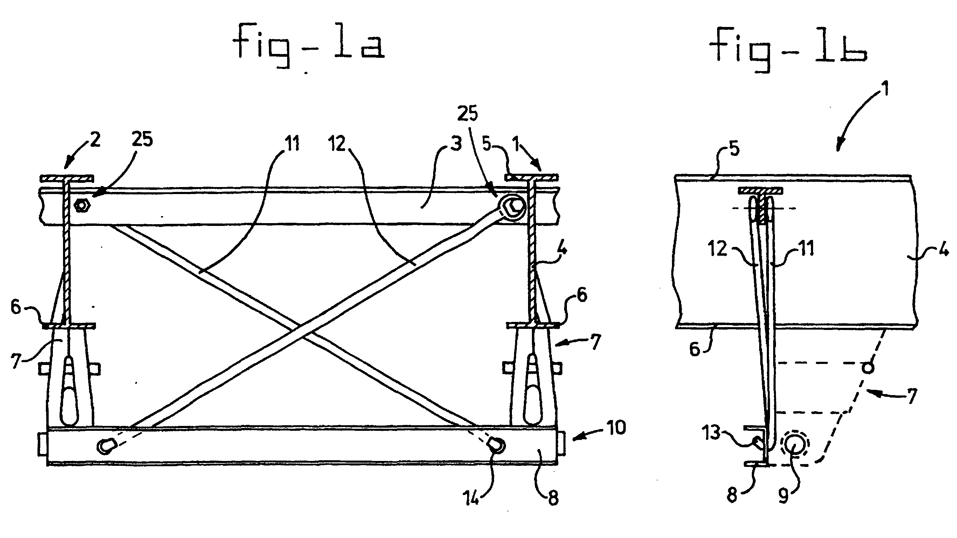

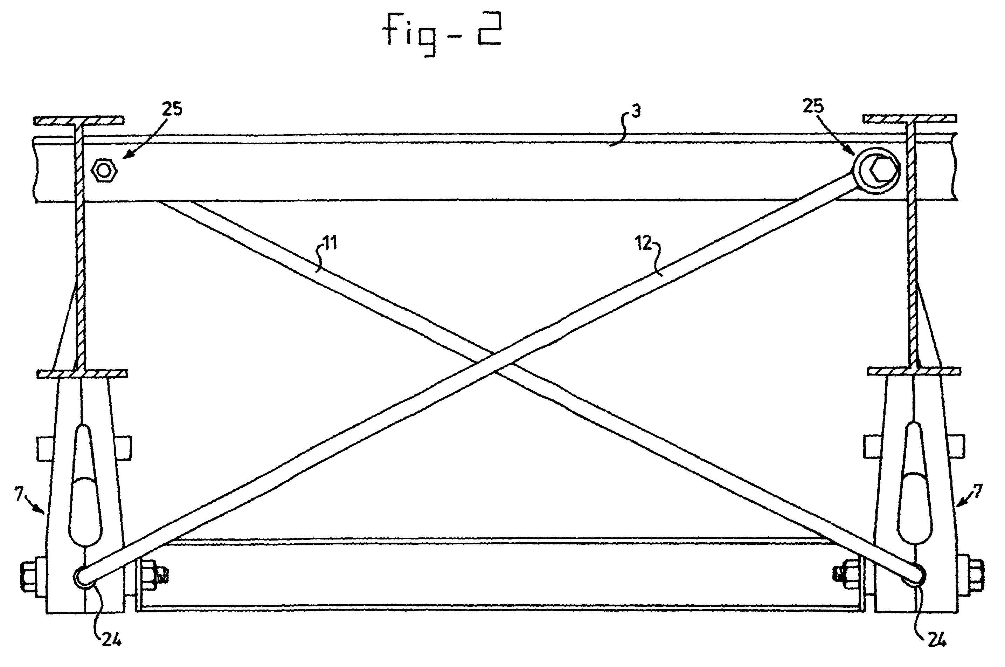

In the variant shown in Figure 2, which largely corresponds to the variant in accordance with Figure 1, the struts 11, 12 are hooked into corresponding recesses 23, 24 in the spring carriers 7, which are connected to the transverse connection 8 by means of bolts.

At their other end, the struts 11, 12 are fastened to the transverse beam 3 by means of the prestressable fastening 25 described with reference to Figure 1.

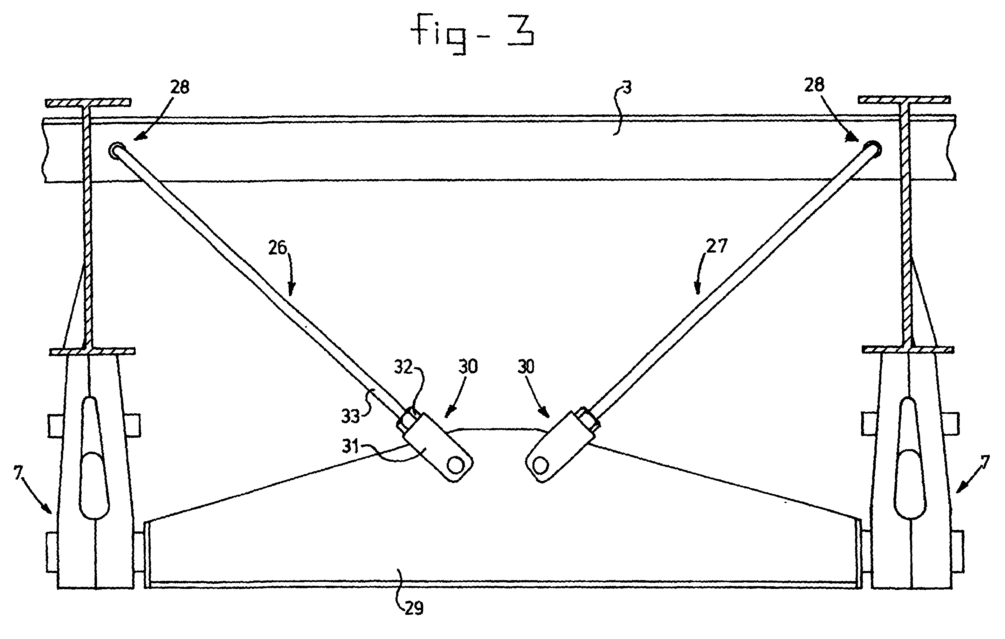

The variant shown in Figure 3 contains struts 26, 27, which, on the one hand, are hooked into recesses 28, 29 in the transverse beam 3, and which, on the other hand, are attached to the transverse connection 29 between the spring carriers 7 by means of the swivel joints which are denoted overall by 30.

Each swivel joint 30 comprises a mounting part 31 with a nut 32 which is connected rotatably thereto and interacts with the screw thread end 33 of each strut 26, 27. By tightening the nuts 32, the struts 26, 27 can be given the desired prestressing. The nuts 32 can be protected against coming loose in a conventional manner by means of a locking mechanism (not shown).

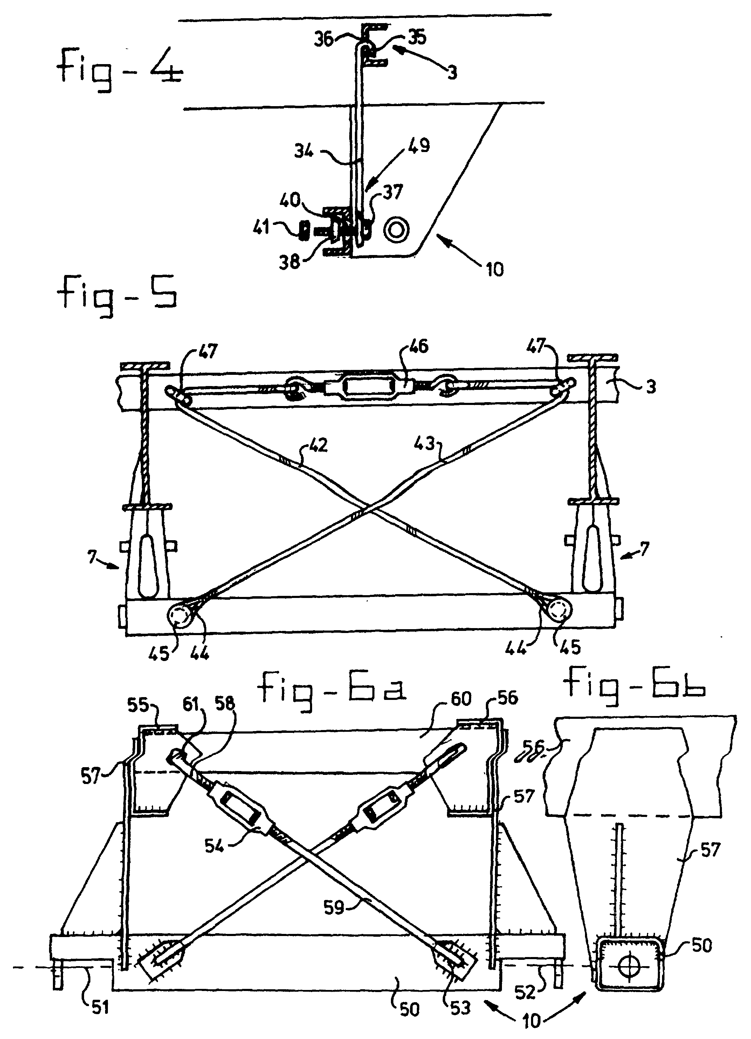

The variant shown in Figure 4 illustrates a prestressing connection 49. The strut 34 is attached by means of a hook 35 to the recess 36 in the transverse beam 3. At its other end, the strut is provided with a hole, in which there is a bolt 37 onto which a cone 38 is pushed.

The transverse connection 39 has a correspondingly shaped conical hole 40. By tightening the nut 41 onto the bolt 37, the assembly comprising cone 38, transverse connection 39 and strut 34 are pressed together, and the prestress is obtained as a result of the fact that the bolt 37 is initially positioned eccentrically in the hole 40 and is then centred by the interaction between the conical surfaces of cone 38 and hole 40.

In the variant shown in Figure 5, a stressing cable comprising three parts 42, 43, 50 is used. Each stressing-cable part 42, 43 is at one end connected by means of a cable eyelet 44 to a pin 45 on the transverse connection 4. At the other end, each stressing-cable part 42, 43 is connected to a tensioner 46. The cable parts are also guided around support points 47 on the transverse beam 48, between which support parts 47 the cable part 50 extends.

The stressing-cable parts 42, 43 can be given the desired prestress by means of the tensioner 46, with the result that the desired stabilization of subframe and chassis can be ensured. The cable parts are locked (not shown) in position at the location of the support points 47, in such a manner that relative displacements are avoided at those locations.

The variant shown in Figures 6a, 6b comprises a vehicle chassis with U-shaped beams 55, 56, to which a spring carrier arm 50 is attached by means of support plates 57. The supporting arms (not shown) may be suspended from the ends 51, 52 of this spring carrier arm.

The subframe 10 formed in this way is stabilized with respect to the vehicle chassis 55, 56, 60 by means of two struts 54, 58, 59. The struts comprise rod parts 58, 59, of which the ends facing towards one another are provided with oppositely directed screw threads, in such a manner that they can be stressed by means of swivel 54. Rod part 59 is attached by means of a welded joint 53 to the spring carrier arm 50; rod part 58 is connected to the transverse beam 60 by means of a hook or eyelet connection 62.

## Claims

1. Pneumatic spring system for a vehicle, comprising a vehicle chassis, a subframe (10) situated at a distance below the vehicle chassis, supporting arms, which are connected to the subframe (10) in a hinged manner on either side of the vehicle chassis and support an axle, two pneumatic springs, in each case located between a supporting arm and the chassis (1-3), and struts (11, 12; 26, 27; 34; 42, 43), which run obliquely downwards from the chassis and are connected to the subframe (10), **characterized in that** each strut (11, 12; 26, 27; 34; 42, 43) is prestressed between the chassis (1-3) and the subframe (10).

2. Pneumatic spring system according to Claim 1, in which at least one strut (11, 12; 26, 27; 34) is connected at a fixed location to the chassis (1-3) or the subframe (10) and is connected to the other of these components by means of an adjustable stressing connection (25, 30, 49).

3. Pneumatic spring system according to Claim 2, in which at least one strut (11, 12; 26, 27, 34) is connected to the chassis (1-3) or the subframe (10) by means of a hook connection (13, 35), an eyelet connection or a welded joint (53).

4. Pneumatic spring system according to Claim 2 or 3, in which at least one strut (11, 12, 34) is connected to the subframe (10) or the chassis (1-3) by means of an eccentric mechanism (25, 49) which can be fixed in place.

5. Pneumatic spring system according to one of the preceding claims, in which at least one strut (26, 27) can be stressed by means of a swivel (30, 54).

6. Pneumatic spring system according to one of the preceding claims, for a vehicle whose chassis is composed of longitudinal beams (1, 2) and transverse beams (3), the struts (11, 12; 26, 27; 34) of which vehicle are connected to a transverse beam (3) which lies essentially vertically above the subframe (10), at least one strut (11, 12; 26, 27, 34) being connected at a fixed location to the transverse beam (3) or the subframe (10) and being connected to the other of these components by means of an adjustable stressing connection (25, 30, 49).

7. Pneumatic spring system according to one of the preceding claims, in which the subframe (10) comprises a spring carrier arm (50) which runs transversely below the vehicle chassis, forms a transverse connection and at each of its ends (50, 51) is connected to a supporting arm.

8. Pneumatic spring system according to one of Claims 1-6, in which the subframe (10) comprises spring carriers (7) on either side of the vehicle chassis, which spring carriers (7) are connected to one another by means of a transverse connection (18, 29, 39, 48) at a distance below the chassis (1-3) and to each of which spring carriers (7) a supporting arm is connected.

9. Pneumatic spring system according to Claim 8, in which at least one strut (11, 12) is connected to the transverse connection (3).

10. Pneumatic spring system according to Claim 9, in which the struts (11, 12) are each connected to a different side of the transverse connection (3).

11. Pneumatic spring system according to one of Claims 7-10, in which at least one strut (11, 12) is connected to a spring carrier (7).

12. Pneumatic spring system according to one of the preceding claims, in which at least one strut comprises a prestressed cable or cable part (42, 43).

13. Pneumatic spring system according to Claim 12, in which the cable parts (42, 43) forming the struts are designed integrally with a further cable part (50) connecting the said cable parts, and the two free ends of the two cable parts (42, 43) forming the struts are connected to the subframe (20) or the transverse beam.

14. Pneumatic spring system according to Claim 13, in which the cable parts (42, 43, 50) form part of a cable which is wrapped around two fixed support points (47) on the transverse beam (3) or the subframe (10).

15. Pneumatic spring system according to Claim 14, in which the cable (42, 43, 50) is wrapped around, and attached to, support points (47) on the transverse beam (3) and the subframe (10), and at least one of the support points (45) can be displaced by means of a prestressing member in order to prestress the cable by displacing the said support point(s).

16. Pneumatic spring system according to one of Claims 11-14, in which a cable tensioner (46) is incorporated in the cable (42, 43, 50).

## Patentansprüche

1. Luftfedersystem für ein Fahrzeug, umfassend ein Fahrzeugfahrgestell, einen Hilfsrahmen (10), der sich in einem Abstand unter dem Fahrzeugfahrgestell befindet, Tragarme, die auf eine schwenkbare Weise auf jeder Seite des Fahrzeugfahrgestells mit dem Hilfsrahmen (10) verbunden sind und eine Achse tragen, zwei Luftfedern, die sich in jedem Fall zwischen einem Tragarm und dem Fahrgestell (1-3) befinden, und Verstrebungselemente (11, 12; 26, 27; 34; 42, 43), die vom Fahrgestell aus schräg nach unten verlaufen und mit dem Hilfsrahmen (10) verbunden sind, **dadurch gekennzeichnet, dass** jedes Verstrebungselement (11, 12; 26, 27; 34; 42, 43) zwischen dem Fahrgestell (1-3) und dem Hilfsrahmen (10) vorgespannt ist.

2. Luftfedersystem nach Anspruch 1, bei dem mindestens ein Verstrebungselement (11, 12; 26, 27; 34) an einer festen Stelle mit dem Fahrgestell (1-3) oder dem Hilfsrahmen (10) verbunden ist und mit dem anderen dieser Bauteile mittels einer einstellbaren Spannverbindung (25, 30, 49) verbunden ist.

3. Luftfedersystem nach Anspruch 2, bei dem mindestens ein Verstrebungselement (11, 12; 26, 27, 34) mittels einer Hakenverbindung (13, 35), einer Ösenverbindung oder einer Schweißverbindung (53) mit dem Fahrgestell (1-3) oder dem Hilfsrahmen (10) verbunden ist.

4. Luftfedersystem nach Anspruch 2 oder 3, bei dem mindestens ein Verstrebungselement (11, 12, 34) mittels eines Exzentermechanismus (25, 49), der fixiert werden kann, mit dem Hilfsrahmen (10) oder dem Fahrgestell (1-3) verbunden ist.

5. Luftfedersystem nach einem der vorangehenden Ansprüche, bei dem mindestens ein Verstrebungselement (26, 27) mittels einer Drehbefestigung (30, 54) gespannt werden kann.

6. Luftfedersystem nach einem der vorangehenden Ansprüche für ein Fahrzeug, dessen Fahrgestell aus Längsträgern (1, 2) und Querträgern (3) besteht, wobei die Verstrebungselemente (11, 12; 26, 27; 34) dieses Fahrzeugs mit einem Querträger (3) verbunden sind, der im Wesentlichen vertikal über dem Hilfsrahmen (10) liegt, wobei mindestens ein Verstrebungselement (11, 12; 26, 27, 34) an einer festen Stelle mit dem Querträger (3) oder dem Hilfsrahmen (10) verbunden ist und mit dem anderen dieser Bauteile mittels einer einstellbaren Spannverbindung (25, 30, 49) verbunden ist.

7. Luftfedersystem nach einem der vorangehenden Ansprüche, bei dem der Hilfsrahmen (10) einen Federträgerarm (50) umfasst, der quer unter dem Fahrzeugfahrgestell verläuft, eine Querverbindung bildet und an jedem seiner Enden (50, 51) mit einem Tragarm verbunden ist.

8. Luftfedersystem nach einem der Ansprüche 1-6, bei dem der Hilfsrahmen (10) auf jeder Seite des Fahrzeugfahrgestells Federträger (7) umfasst, welche Federträger (7) mittels einer Querverbindung (18, 29, 39, 48) in einem Abstand unter dem Fahrgestell (1-3) miteinander verbunden sind, und wobei mit jedem dieser Federträger (7) ein Tragarm verbunden ist.

9. Luftfedersystem nach Anspruch 8, bei dem mindestens ein Verstrebungselement (11, 12) mit der Querverbindung (3) verbunden ist.

10. Luftfedersystem nach Anspruch 9, bei dem die Verstrebungselemente (11, 12) jeweils mit einer unterschiedlichen Seite der Querverbindung (3) verbunden sind.

11. Luftfedersystem nach einem der Ansprüche 7-10, bei dem mindestens ein Verstrebungselement (11, 12) mit einem Federträger (7) verbunden ist.

12. Luftfedersystem nach einem der vorangehenden Ansprüche, bei dem mindestens ein Verstrebungselement ein vorgespanntes Seil oder Seilstück (42, 43) umfasst.

13. Luftfedersystem nach Anspruch 12, bei dem die die Verstrebungselemente bildenden Seilstücke (42, 43) als Einheit mit einem die Seilstücke verbindenden weiteren Seilstück (50) konstruiert sind und die zwei freien Enden der die Verstrebungselemente bildenden zwei Seilstücke (42, 43) mit dem Hilfsrahmen (20) oder dem Querträger verbunden sind.

14. Luftfedersystem nach Anspruch 13, bei dem die Seilstücke (42, 43, 50) einen Teil eines Seils bilden, das um zwei feste Haltepunkte (47) auf dem Querträger (3) oder dem Hilfsrahmen (10) herumgelegt ist.

15. Luftfedersystem nach Anspruch 14, bei dem das Seil (42, 43, 50) um Haltepunkte (47) auf dem Querträger (3) und dem Hilfsrahmen (10) herumgelegt ist und daran angebracht ist, und mindestens einer der Haltepunkte (45) mittels eines Vorspannelements verlagert werden kann, um das Seil durch Verlagern des (der) Haltepunktes(e) vorzuspannen.

16. Luftfedersystem nach einem der Ansprüche 11-14, bei dem eine Seilspannvorrichtung (46) im Seil (42, 43, 50) enthalten ist.

## Revendications

1. Système à ressort pneumatique pour véhicule, comprenant un châssis de véhicule, un faux châssis (10) situé à distance sous le châssis de véhicule, des bras de support, qui sont reliés au faux châssis (10) de manière articulée de chaque côté du châssis de véhicule et supportent un essieu, deux ressorts pneumatiques, chacun situé entre un bras de support et le châssis (1-3), et des entretoises (11, 12 ; 26, 27 ; 34 ; 42, 43), qui descendent en oblique depuis le châssis et sont reliées au faux châssis (10), **caractérisé en ce que** chaque entretoise (11, 12 ; 26, 27 ; 34 ; 42, 43) est précontrainte entre le châssis (1-3) et le faux châssis (10).

2. Système à ressort pneumatique selon la revendication 1, dans lequel au moins une entretoise (11, 12 ; 26, 27 ; 34) est reliée, en un emplacement fixe, au châssis (1-3) ou au faux châssis (10) et est reliée à l'autre de ces organes au moyen d'une connexion à contrainte réglable (25, 30, 49).

3. Système à ressort pneumatique selon la revendication 2, dans lequel au moins une entretoise (11, 12 ; 26, 27, 34) est reliée au châssis (1-3) ou au faux châssis (10) au moyen d'une connexion à crochet (13, 35), d'une connexion à oeillet ou d'un raccord soudé (53).

4. Système à ressort pneumatique selon la revendication 2 ou 3, dans lequel au moins une entretoise (11, 12, 34) est reliée au faux châssis (10) ou au châssis (1-3) au moyen d'un mécanisme à excentrique (25, 49) qui peut être maintenu en place de manière fixe.

5. Système à ressort pneumatique selon l'une des revendications précédentes, dans lequel au moins une entretoise (26, 27) peut être contrainte au moyen d'un émerillon (30, 54).

6. Système à ressort pneumatique selon l'une des revendications précédentes, pour un véhicule dont le châssis est constitué de poutres longitudinales (1, 2) et de poutres transversales (3), les entretoises (11, 12 ; 26, 27 ; 34) du véhicule étant reliées à une poutre transversale (3) qui se trouve essentiellement verticalement au dessus du faux châssis (10), au moins une entretoise (11, 12 ; 26, 27, 34) étant reliée, en un emplacement fixe, à la poutre transversale (3) ou au faux châssis (10) et étant reliée à l'autre de ces organes au moyen d'une connexion à contrainte réglable (25, 30, 49).

7. Système à ressort pneumatique selon l'une des revendications précédentes, dans lequel le faux châssis (10) comprend un bras porte-ressort (50) qui s'étend transversalement sous le châssis du véhicule, forme une connexion transversale et est relié en chacune de ses extrémités (50, 51) à un bras de support.

8. Système à ressort pneumatique selon l'une des revendications 1 à 6, dans lequel le faux châssis (10) comprend des porte-ressort (7) de chaque côté du châssis du véhicule, lesquels porte-ressort (7) sont reliés les uns aux autres au moyen d'une connexion transversale (18, 29, 39, 48) à distance sous le châssis (1-3), un bras de support étant relié à chacun de ces porte-ressort (7).

9. Système à ressort pneumatique selon la revendication 8, dans lequel au moins une entretoise (11, 12) est reliée à la connexion transversale (3).

10. Système à ressort pneumatique selon la revendication 9, dans lequel les entretoises (11, 12) sont reliées chacune à un côté différent de la connexion transversale (3).

11. Système à ressort pneumatique selon l'une des revendications 7 à 10, dans lequel au moins une entretoise (11, 12) est reliée à un porte-ressort (7).

12. Système à ressort pneumatique selon l'une des revendications précédentes, dans lequel au moins une entretoise comprend un câble ou partie de câble (42, 43) précontraint(e).

13. Système à ressort pneumatique selon la revendication 12, dans lequel les parties de câble (42, 43) formant les entretoises sont dessinées d'un seul tenant avec une partie de câble supplémentaire (50) qui relie lesdites parties de câble, et les deux extrémités libres des deux parties de câble (42, 43) formant les entretoises sont reliées au faux châssis (20) ou à la poutre transversale.

14. Système à ressort pneumatique selon la revendication 13, dans lequel les parties de câble (42, 43, 50) font partie d'un câble qui est enroulé autour de deux points de support fixes (47) sur la poutre transversale (3) ou le faux châssis (10).

15. Système à ressort pneumatique selon la revendication 14, dans lequel le câble (42, 43, 50) est enroulé autour de, et attaché à, des points de support (47) sur la poutre transversale (3) et le faux châssis (10), et au moins un des points de support (45) peut être déplacé au moyen d'un élément de précontrainte afin de précontraindre le câble en déplaçant ledit ou lesdits point(s) de support.

16. Système à ressort pneumatique selon l'une des revendications 11 à 14, dans lequel un tendeur de câble (46) est incorporé au câble (42, 43, 50).
